# EUROPÄISCHE PATENTSCHRIFT

(11) **EP 2 260 361 B1**
(45) Veröffentlichungstag und Bekanntmachung des Hinweises auf die Patenterteilung: **09.05.2018**
(21) Anmeldenummer: 09727095.3
(22) Anmeldetag: 20.03.2009
(51) Int. Cl.: G05D 23/19

(54) **VORRICHTUNG UND VERFAHREN ZUM ÜBERWACHEN VON BEHEIZTEN FLÜSSIGKEITSBÄDERN**
DEVICE AND METHOD FOR MONITORING HEATED LIQUID BATHS
DISPOSITIF ET PROCÉDÉ DE SURVEILLANCE DE BAINS DE LIQUIDES CHAUFFÉS

(30) Priorität: 31.03.2008 DE 102008016442
(43) Veröffentlichungstag der Anmeldung: 15.12.2010
(73) Patentinhaber: Peter Huber Kältemaschinenbau AG, 77656 Offenburg (DE)
(72) Erfinder: PFORTE, Dieter, 77797 Ohlsbach (DE); RIEGER, Frank, 77770 Durbach (DE)
(74) Vertreter: Manitz Finsterwald Patentanwälte PartmbB
(86) Internationale Anmeldenummer: PCT/EP2009/002076
(87) Internationale Veröffentlichungsnummer: WO 2009/121497

(56) Entgegenhaltungen:
- EP-A1- 0 380 369
- EP-A1- 1 103 209
- WO-A1-96/25869
- WO-A1-2005/020767

## Beschreibung

Die vorliegende Erfindung betrifft ein Verfahren zum Betreiben eines mit einer Heizeinrichtung, insbesondere einer elektrischen Widerstandsheizung, beheizten Flüssigkeitsbades, insbesondere zum Überwachen auf Überhitzung und/oder Absinken des Flüssigkeitsniveaus, bei welchem mittels eines Temperaturfühlers eine Ist-Temperatur ermittelt und in Abhängigkeit von der mit dem Temperaturfühler gemessenen Ist-Temperatur ein Alarm- und/oder Steuersignal ausgegeben wird. Darüber hinaus betrifft die vorliegende Erfindung eine Vorrichtung zum Betreiben eines mit einer Heizeinrichtung , insbesondere einer elektrischen Widerstandsheizung, beheizten Flüssigkeitsbades, insbesondere zum Überwachen auf Überhitzung und/oder Absinken des Flüssigkeitsniveaus, mit einem Temperaturfühler zur Ermittlung einer Ist-Temperatur und einer Alarm- und/oder Steuersignaleinheit, die dazu ausgebildet ist, in Abhängigkeit von der mit dem Temperaturfühler gemessenen Ist-Temperatur ein Alarm- und/oder Steuersignal auszugeben,
Vorrichtungen der genannten Art sind bekannt und werden auch als Temperaturregler, Thermostate oder Badthermostate bezeichnet. Die Flüssigkeit im Flüssigkeitsbad, die auch als Wärmeträger bezeichnet wird, kann brennbar sein. Dann muss nach den Normen DIN EN 61010-2-010 und DIN 12879 eine derartige Vorrichtung mit einem einstellbaren Übertemperaturschutz und einem Unterniveauschutz ausgerüstet sein.

Der Übertemperaturschutz wird auch als Übertemperaturbegrenzer bezeichnet. Dieser regelt die der Heizeinrichtung zugeführte Heizleistung derart, dass die mit dem Temperaturfühler gemessene Ist-Temperatur den Brennpunkt der Flüssigkeit im Flüssigkeitsbad nicht erreicht oder gar übersteigt. Da das Flüssigkeitsbad normalerweise umgewälzt wird, entspricht die gemessene Temperatur in der Regel einer mittleren Temperatur des Flüssigkeitsbades. Daher kann nicht sichergestellt werden, dass Temperaturen in bestimmten Bereichen oder in der Umgebung des Flüssigkeitsbades auftreten, die höher sind als die mit dem Temperaturfühler gemessene Ist-Temperatur.

Als Unterniveauschutz finden bei bekannten Vorrichtungen Schwimmer im Flüssigkeitsbad Anwendung, mit deren Hilfe die Höhe des Flüssigkeitsniveaus ermittelt wird. Hieraus kann ein Absinken des Flüssigkeitsniveaus unterhalb des vorgesehenen Flüssigkeitsniveaus festgestellt werden. Problematisch ist jedoch, dass sich ein Schwimmer festsetzen und so nicht mehr zur Ermittlung des aktuellen Flüssigkeitsniveaus des Flüssigkeitsbades dienen kann.

Die EP 0 380 369 A1 beschreibt einen Wasserkocher mit einer Heizeinrichtung, bei dem ein Temperaturfühler zur Überwachung auf Überhitzung und/oder Absinken des Flüssigkeitsniveaus zum Einsatz kommt.

Es ist Aufgabe der vorliegenden Erfindung, eine verbesserte Vorrichtung und ein verbessertes Verfahren der eingangs genannten Art anzugeben.

Diese Aufgabe wird bei einem Verfahren der eingangs genannten Art dadurch gelöst, dass mittels des Temperaturfühlers die Ist-Temperatur der Heizeinrichtung oder die Ist-Temperatur der Flüssigkeit in unmittelbarer Nähe der Heizeinrichtung ermittelt wird. Bei einer Vorrichtung der eingangs genannten Art wird die Aufgabe dadurch gelöst, dass der Temperaturfühler zur Ermittlung der Ist-Temperatur der Heizeinrichtung oder der Ist-Temperatur der Flüssigkeit in unmittelbarer Nähe der Heizeinrichtung ausgebildet ist.

An der Heizeinrichtung treten die höchsten Temperaturen im Flüssigkeitsbad oder in der Umgebung des Flüssigkeitsbades auf. Bei dem erfindungsgemäßen Verfahren erfolgt eine Überwachung der Ist-Temperatur der Heizeinrichtung mittels des Temperaturfühlers. Damit kann sichergestellt werden, dass auch die heißesten Stellen im Bereich des Flüssigkeitsbades nicht den Brennpunkt der Flüssigkeit erreichen.

Bevorzugt wird ein Alarm- und/oder Steuersignal ausgegeben, wenn die mit dem Temperaturfühler ermittelte Ist-Temperatur der Heizeinrichtung eine vorgegebene Maximaltemperatur erreicht. Die Maximaltemperatur kann dabei so gewählt sein, dass diese beispielsweise 15 K unterhalb des Brennpunkts der Flüssigkeit liegt. Mittels des Steuersignals kann insbesondere eine Herabsetzung der Heizleistung ausgelöst werden, die der Heizeinrichtung zugeführt wird. Dadurch kann sichergestellt werden, dass die Ist-Temperatur der Heizeinrichtung absinkt und auch an der Heizeinrichtung keine Temperatur erreicht wird, die eine Entflammung der Flüssigkeit verursacht.

Bevorzugt ist zusätzlich zu dem Temperaturfühler an der Heizeinrichtung ein herkömmlicher zweiter Temperaturfühler zur Ermittlung der Ist-Temperatur des Flüssigkeitsbades vorgesehen. Die Badtemperatur kann dadurch direkt ermittelt werden und muss nicht aus der Temperatur der Heizeinrichtung abgeleitet werden.

Nach einer weiteren bevorzugten Ausführungsform der Erfindung wird ein Alarm- und/oder Steuersignal ausgegeben, wenn die mit dem ersten Temperaturfühler gemessene Ist-Temperatur der Heizeinrichtung die mit dem zweiten Temperaturfühler gemessene Ist-Temperatur des Flüssigkeitsbades um einen vorgegebenen ersten Temperaturwert, beispielsweise 15 K, und/oder einen zweiten Temperaturwert, beispielsweise 30 K, übersteigt. Hiermit kann die Differenz der Ist-Temperaturen zwischen Heizeinrichtung und Flüssigkeitsbad überwacht werden und, falls diese den ersten Temperaturwert übersteigt, kann durch Ausgabe des Alarm- und/oder Steuersignals reagiert, beispielsweise die Heizleistung begrenzt werden. Wird der zweite Temperaturwert überstiegen, so kann beispielsweise ein Fehler ausgegeben werden.

Bevorzugt wird des weiteren ein Alarm- und/oder Steuersignal, insbesondere ein Fehlersignal, ausgegeben, wenn die mit dem zweiten Temperaturfühler gemessene Ist-Temperatur des Flüssigkeitsbades die mit dem ersten Temperaturfühler gemessene Ist-Temperatur der Heizeinrichtung um einen vorgegebenen Temperaturwert übersteigt. Ist die gemessene Ist-Temperatur des Flüssigkeitsbades höher als die gemessene Ist-Temperatur der Heizeinrichtung, so liegt eine Fehlfunktion des ersten und/oder des zweiten Temperaturfühlers vor, was über das Fehlersignal angezeigt werden kann.

Der erste Temperaturfühler ist bevorzugt in einem oberen Bereich der Heizeinrichtung und unmittelbar an der Heizeinrichtung angeordnet. Insbesondere besteht eine gute thermische Kopplung zwischen dem ersten Temperaturfühler und einer kritischen Stelle der Heizeinrichtung. Diese Stelle kann beispielsweise das obere Ende eines die Heizeinrichtung bildenden Heizstabes oder einer Heizwendel sein.

Insbesondere kann vorgesehen sein, dass der obere Bereich der Heizeinrichtung über die Flüssigkeit hinausragt, wenn das Flüssigkeitsbad bis zum vorgesehenen Niveau gefüllt ist. Da die Heizeinrichtung Wärme in der Regel schlechter an die Umgebungsluft abgibt als an die Flüssigkeit, wird sich der obere Bereich stärker erwärmen als der in Flüssigkeit stehende Bereich der Heizeinrichtung. Folglich werden im oberen Bereich der Heizeinrichtung die höchsten Temperaturen auftreten, die mittels des ersten Temperaturfühlers überwacht werden.

Im übrigen ist eine Entflammung der Flüssigkeit insbesondere erst dann möglich, wenn die Flüssigkeit Kontakt mit Sauerstoff hat und sich ein Flüssigkeits-/Sauerstoff-Gemisch bilden kann. Daher wird durch die Anordnung des ersten Temperaturfühlers im oberen Bereich der Heizeinrichtung durch das erfindungsgemäßen Verfahren ausgeschlossen, dass gerade dort, insbesondere nach Absinken des Flüssigkeitsniveaus, Temperaturen erreicht werden, die zu einer Entzündung des Flüssigkeit-/Sauerstoff-Gemischs führen.

Bevorzugt ist ferner ein dritter Temperaturfühler zur Ermittlung der Ist-Temperatur der Heizeinrichtung vorgesehen, welcher in einem unteren Bereich der Heizeinrichtung und unmittelbar an der Heizeinrichtung angeordnet ist. Ein Alarm- und/oder Steuersignal wird ausgegeben in Abhängigkeit der Differenz der vom ersten und dritten Temperaturfühler gemessenen Ist-Temperaturen. Damit kann insbesondere bei einem zu hohen Temperaturgefälle zwischen dem oberen und unteren Bereich der Heizeinrichtung ein Alarm- und/oder Steuersignal ausgegeben werden. Insbesondere kann vorgesehen sein, ein Alarm- und/oder Steuersignal auszugeben, wenn die Differenz der Ist-Temperaturen 15 K oder 30 K beträgt.

Des weiteren kann ein Alarm- und/oder Steuersignal in Abhängigkeit der Differenz der vom zweiten und dritten Temperaturfühler gemessenen Ist-Temperaturen ausgegeben werden. Hierdurch wird eine Redundanz erreicht, durch welche auch bei Ausfall des ersten Temperaturfühlers sichergestellt ist, dass die Differenz zwischen einer Ist-Temperatur an der Heizung und der Ist-Temperatur des Flüssigkeitsbades festgestellt wird.

Nach einer weiteren Ausgestaltung der Erfindung wird ein Absinken des Flüssigkeitsniveaus des Flüssigkeitsbades angenommen, wenn mit dem ersten Temperaturfühler eine höhere Ist-Temperatur gemessen wird als mit dem dritten Temperaturfühler. Wie bereits weiter oben erwähnt, wird sich bei Absinken des Niveaus zunächst der obere Bereich stärker erwärmen als der untere Bereich der Heizeinrichtung, so dass das Absinken besonders vorteilhaft durch Vergleich der von dem ersten und dritten Temperaturfühler gemessenen Ist-Temperaturen der Heizeinrichtung festgestellt werden kann.

Bevorzugt wird gegebenenfalls die Heizleistung, die der Heizeinrichtung zugeführt wird, gesenkt oder abgeschaltet, wenn die Differenz der vom ersten und dritten Temperaturfühler gemessenen Ist-Temperaturen größer oder gleich einem vorgegebenen dritten Temperaturwert, insbesondere 15 K, ist. Weiter bevorzugt wird ein Alarmsignal ausgegeben, wenn die Differenz größer oder gleich einem vorgegebenen vierten Temperaturwert, insbesondere 30 K, ist.

Des weiteren kann ein im Wesentlichen leeres Flüssigkeitsbad angenommen werden, wenn die mit dem ersten und/oder dritten Temperaturfühler gemessenen Ist-Temperaturen der beheizten Heizeinrichtung die mit dem zweiten Temperaturfühler gemessene Ist-Temperatur übersteigen. Bei einem leeren Flüssigkeitsbad wird der zweite Temperaturfühler die im Wesentlichen konstant bleibende Temperatur der Umgebungsluft messen. Demgegenüber messen der erste und gegebenenfalls dritte Temperaturfühler die Ist-Temperaturen der beheizten Heizeinrichtung. Insofern kann mittels des erfindungemäßen Verfahrens allein durch Vergleich der mit dem ersten, zweiten und/oder dritten Temperaturfühler gemessenen Ist-Temperaturen ein abgesunkenes oder leeres Flüssigkeitsbad detektiert werden. Ein Schwimmer im Flüssigkeitsbad wird nicht mehr benötigt.

Besonders bevorzugt wird eine Überprüfung auf ein leeres Flüssigkeitsniveau, wie zuvor beschrieben, bei jedem Einschalten der Heizeinrichtung durchgeführt. Dadurch kann eine Inbetriebnahme bei noch leerem Bad verhindert werden.

Weiter bevorzugt wird beim Einschalten der Heizeinrichtung überprüft, ob die Heizeinrichtung ordnungsgemäß funktioniert, indem ein kurzer Stromstoß auf die Heizeinrichtung gegeben wird. Melden der erste und dritte Temperaturfühler einen Temperaturanstieg, der zweite dagegen nicht, so kann angenommen werden, dass die Heizeinrichtung ordnungsgemäß funktioniert.

Nach einer weiteren bevorzugten Ausführungsform der Erfindung ist eine Umwälzpumpe zur Umwälzung der Flüssigkeit im Flüssigkeitsbad vorgesehen. Bevorzugt wird damit eine Funktionsüberprüfung der Heizeinrichtung durchgeführt, indem bei ausgeschalteter Heizeinrichtung die Umwälzpumpe angeschaltet und ermittelt wird, ob die mit dem ersten Temperaturfühler und/oder dem zweiten Temperaturfühler und/oder dem dritten Temperaturfühler gemessenen Ist-Temperaturen über einen vorgegebenen Zeitraum nach dem Anschalten der Umwälzpumpe einen rampenförmigen Anstieg zeigen, der von der Wärmeentwicklung der Umwälzpumpe herrührt.

Insbesondere wird die Funktionstüchtigkeit des ersten Temperaturfühlers und des zweiten Temperaturfühlers und gegebenenfalls des dritten Temperaturfühlers angenommen, wenn bei noch unbeheizter Heizeinrichtung die gemessenen Ist-Temperaturrampen im Wesentlichen übereinstimmen und/oder wenn nach vorgegebener Zeit keine Differenz zwischen den gemessenen Ist-Temperaturen besteht.

Falls eine Diskrepanz zwischen den gemessenen Rampen oder Ist-Temperaturen festgestellt wird, kann nach Ablauf einer vorgegebenen Zeitdauer die Funktionsüberprüfung des ersten und des zweiten und/oder des dritten Temperaturfühlers nochmals durchgeführt werden. Falls dann erneut eine Diskrepanz zwischen den Rampen oder Ist-Temperaturen festgestellt wird, wird bevorzugt ein Alarmsignal ausgegeben, insbesondere um den Benutzer über eine mögliche Funktionsuntüchtigkeit der Temperaturfühler zu informieren.

Nach einer weiteren bevorzugten Ausführungsform der Erfindung wird der Brennpunkt der Flüssigkeit von einem Benutzer erfragt, indem der Benutzer aufgefordert wird, den Brennpunkt der Flüssigkeit in eine Steuereinrichtung einzugeben. Alternativ oder ergänzend kann der Benutzer aufgefordert werden, die genaue Bezeichnung der Flüssigkeit in die Steuereinrichtung einzugeben. Bevorzugt sind die Brennpunkte für eine Vielzahl von Flüssigkeiten in der Steuereinrichtung hinterlegt, so dass die Steuereinrichtung den Brennpunkt für die vom Benutzer angegebene Bezeichnung ermitteln kann. Weiter bevorzugt erfolgt eine Plausibilitätsprüfung, ob der eingegebene Brennpunkt dem für die Flüssigkeit in der Steuereinrichtung hinterlegten Brennpunkt entspricht, indem die Brennpunkte miteinander verglichen werden. Gegebenenfalls wird ein Alarmsignal ausgegeben, falls eine Abweichung zwischen dem eingegebenen Brennpunkt und dem hinterlegten Brennpunkt festgestellt wird.

Der Grundgedanke der Erfindung besteht also darin, einen Temperaturfühler in unmittelbarer Nähe zu der Heizeinrichtung anzubringen. Besonders bevorzugt sind zwei Fühler vorgesehen, und zwar einer im oberen Bereich der Heizeinrichtung und einer im Bereich des unteren Endes der Heizeinrichtung. Der Badfühler zur Einhaltung der Badtemperatur ist bevorzugt wie üblich in der Nähe der Umwälzpumpe angebracht. Die am Heizkörper angebrachten Temperaturfühler sind bevorzugt so nahe am Heizkörper angebracht, dass die Filmtemperatur des am Heizkörper gebildeten Flüssigkeitsfilms gemessen werden kann. Die Temperaturfühler können insbesondere auch im direkten Kontakt mit dem Heizkörper stehen.

Anhand der zwei bzw. drei Messwerte der Temperaturfühler kann nicht nur festgestellt werden, ob eine Überhitzung des Wärmebades auftritt, sondern es kann auch ein Niveauabfall des Bades festgestellt werden. Steigt beispielsweise die festgestellte Temperatur am oberen und am unteren Fühler an der Heizeinrichtung stark an, während der Badfühler keinen Temperaturanstieg feststellt, so ist das Bad leer, denn der Badfühler misst die Umgebungstemperatur. Steigt nur die Temperatur am oberen Heizungsfühler an, nicht dagegen am unteren Heizungsfühler, so liegt eine Überhitzung vor, die auf ein Abfallen des Niveaus der Flüssigkeit zurückzuführen ist.

Bei Feststellen eines Fehlers, insbesondere einer Überhitzung oder eines Niveauabfalls des Bades wird ein Alarm ausgegeben. Es kann auch vorgesehen sein, die Heizeinrichtung abzuschalten, wobei dies bevorzugt nach einer einstellbaren Zeit erfolgt, so dass eine Bedienperson gegebenenfalls rechtzeitig Flüssigkeit nachfüllen kann und eine Unterbrechung des Prozesses nicht erforderlich ist. Es ist auch möglich, bei Feststellung einer drohenden Überhitzung die Heizleistung abzusenken. Auch dadurch kann eine Unterbrechung des Prozesses vermieden werden. Im Übrigen ist die Heizwendel bei einer besonderen Ausführungsform über das vorgesehene Flüssigkeitsniveau nach oben hinaus geführt und beheizt, wobei die Messung am oberen Ende in diesem Bereich erfolgt. Eine Überhitzung kann dadurch frühzeitig festgestellt werden.

Nach einem weiteren Gedanken kann beim Einschalten des Bades ein Sicherheitscheck durchgeführt werden, ob die Heizung ordnungsgemäß funktioniert, ohne dass die Temperierung gestartet werden muss. Hierfür wird ein kurzer Stromstoß auf die Heizung gegeben. Melden der obere und der untere Temperaturfühler an der Heizeinrichtung einen Temperaturanstieg, der Badfühler dagegen nicht, so ist die Heizung in Ordnung. Es wird dann ein Signal ausgegeben, dass das Bad leer ist.

Alle geschilderten Maßnahmen können sowohl einzeln als auch in beliebiger Kombination miteinander erfindungswesentlich sein.

Nachfolgend wird die Erfindung beispielhaft anhand vorteilhafter Ausführungsformen unter Bezugnahme auf die beigefügten Zeichnungen beschrieben. Es zeigen:
- Fig. 1: schematisch eine erste Variante einer erfindungsgemäßen Vorrichtung,
- Fig. 2: schematisch eine weitere Variante einer erfindungsgemäßen Vorrichtung.

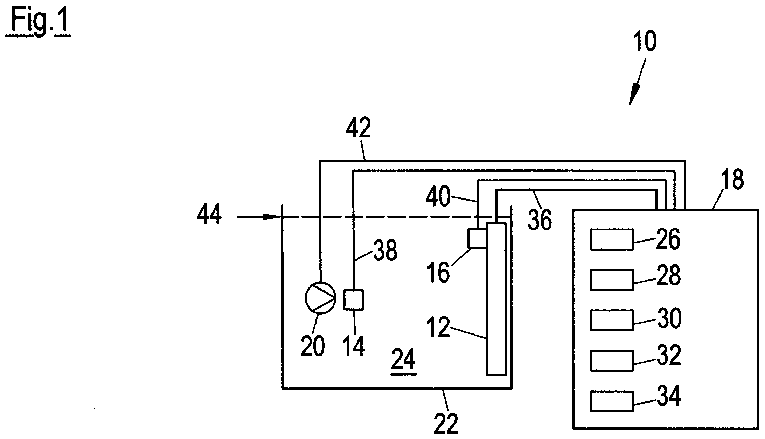

Die in Fig. 1 gezeigte Vorrichtung 10 weist eine Heizeinrichtung 12, einen ersten Temperaturfühler 16, einen zweiten Temperaturfühler 14, eine Steuereinrichtung 18 und eine Umwälzpumpe 20 auf. Die Heizeinrichtung 12 und die Umwälzpumpe 20 sind in einem Behälter 22 für ein Flüssigkeitsbad 24 angeordnet. Ferner sind der zweite Temperaturfühler 14 an der Umwälzpumpe 20 und der erste Temperaturfühler 16 in einem oberen Bereich unmittelbar an der Heizeinrichtung 12 angeordnet.

Die Steuereinrichtung 18 umfasst eine Regeleinrichtung 26, einen Mikroprozessor 28, einen Speicher 30, eine Eingabeeinrichtung 32, bei der es sich beispielsweise um eine Tastatur handelt, und eine Ausgabeeinrichtung 34, bei der es sich beispielsweise um einen Bildschirm handelt.

Die Heizeinrichtung 12, der erste Temperaturfühler 16, der zweite Temperaturfühler 14 und die Umwälzpumpe 20 sind mittels elektrischer Leitungen 36, 38, 40, 42 jeweils mit der Steuereinrichtung 18 verbunden, so dass diese von der Steuereinrichtung 18 angesteuert und/oder bestromt werden können.

Es ist insbesondere vorgesehen, das Flüssigkeitsbad 24 bis zu einem vorgesehenen Flüssigkeitsniveau 44 mit Flüssigkeit zu füllen. Dann sind die Heizeinrichtung 12 und die Umwälzpumpe 20 vollständig im Flüssigkeitsbad 24 eingetaucht. Die Heizeinrichtung 12 kann mit ihrem oberen Ende aber auch über das vorgesehene Flüssigkeitsniveau etwas herausragen, und der erste Temperaturfühler kann in diesem außerhalb des Flüssigkeitsbades liegenden Bereich der Heizeinrichtung 12 angeordnet sein.

Ein Benutzer der erfindungsgemäßen Vorrichtung 10 kann in die Steuereinrichtung 18 über die Eingabeeinrichtung 32 eingeben, auf welche Temperatur die Flüssigkeit im Flüssigkeitsbad 24 erwärmt werden soll. Ferner kann der Benutzer über die Eingabeeinrichtung 32 den Brennpunkt der Flüssigkeit im Flüssigkeitsbad 24 eingeben.

Anschließend wird zunächst von der Steuereinheit 18 die Umwälzpumpe 20 eingeschaltet, so dass das Flüssigkeitsbad 24 umgewälzt wird. Dann regelt die Regeleinrichtung 26 die Heizeinrichtung 12 durch Zuführung von elektrischer Heizleistung und unter Verwendung der mittels des zweiten Temperaturfühlers 14 gemessenen Ist-Temperatur des Flüssigkeitsbades 24 so, dass dieses auf die vom Benutzer angegebene Soll-Temperatur erhitzt wird. Dabei überwacht die Regeleinrichtung 26 die Ist-Temperatur der Heizeinrichtung 12 mittels des ersten Temperaturfühlers 16.

Insbesondere kann die an der Heizeinrichtung 12 mittels des ersten Temperaturfühlers 16 gemessene Ist-Temperatur höher sein als die mit dem zweiten Temperaturfühler 14 gemessene Ist-Temperatur, die im Wesentlichen aufgrund der Umwälzung des Flüssigkeitsbades 24 einer mittleren Temperatur des Flüssigkeitsbades 24 entspricht. Insofern kann es möglich sein, dass zur Erwärmung des Flüssigkeitsbades 24 die Ist-Temperatur der Heizeinrichtung 12 so ansteigt, dass diese in die Nähe des Brennpunkts des Flüssigkeitsbades 24 gelangt. Dies kann insbesondere der Fall sein, wenn die Soll-Temperatur in der Nähe des Brennpunkts liegt.

Die Regeleinrichtung 26 ist so ausgebildet, dass diese ein Steuersignal ausgibt, das eine Herabsenkung oder gegebenenfalls auch eine Abschaltung der Zufuhr der Wärmeleistung an die Heizeinrichtung 12 auslöst, wenn die mittels des ersten Temperaturfühlers 16 gemessene Ist-Temperatur der Heizeinrichtung 12 eine vorgegebene Maximaltemperatur übersteigt.

Die Maximaltemperatur wird dabei von dem Prozessor 28 anhand des vom Benutzer spezifizierten Brennpunkts des Flüssigkeitsbades 24 festgelegt, beispielsweise so, dass diese 15 K unterhalb des Brennpunkts liegt. Durch das Steuersignal wird somit sichergestellt, dass die Ist-Temperatur der Heizeinrichtung 12 bei Erreichen der Maximaltemperatur gesenkt wird und der Brennpunkt des Flüssigkeitsbades 24 nicht erreicht wird. Eine Entflammung des Flüssigkeitsbades 24 wird damit vermieden.

Die Regeleinrichtung 26 ist ferner so ausgebildet, dass diese eine Absenkung bzw. Abschaltung der Heizleistung, die der Heizeinrichtung 12 zugeführt wird, auslöst, wenn die Differenz zwischen der mit dem ersten Temperaturfühler 16 gemessenen Ist-Temperatur und der mit dem zweiten Temperaturfühler 14 gemessenen Ist-Temperatur einen bestimmten Wert, beispielsweise 15 K oder 30 K, übersteigt. Damit wird sichergestellt, dass keine zu hohe Temperaturdifferenz zwischen der Heizeinrichtung 12 und dem damit beheizten Flüssigkeitsbad 24 auftritt. Insbesondere wird durch diese Maßnahme ein Überschießen der Ist-Temperatur über die vom Benutzer vorgegebene Soll-Temperatur vermieden.

Des weiteren ist die Steuereinrichtung 18 dazu ausgebildet, ein Fehlersignal über die Ausgabeeinrichtung 34 auszugeben, wenn die Differenz zwischen der mit dem zweiten Temperaturfühler 14 gemessenen Ist-Temperatur und der mit dem ersten Temperaturfühler 16 gemessenen Ist-Temperatur einen bestimmten positiven Wert übersteigt. Prinzipiell sollte bei beheizter Heizeinrichtung 12 die mit dem ersten Temperaturfühler 16 gemessene Ist-Temperatur größer sein als die Ist-Temperatur des Flüssigkeitsbades 24, die mit dem zweiten Temperaturfühler 14 gemessen wird. Insofern kann ein Fehler bzw. eine Fehlfunktion des ersten und/oder zweiten Temperaturfühlers 14, 16 angenommen werden, wenn diese Differenz unter Berücksichtigung eines Toleranzbereichs den bestimmten Wert, beispielsweise 3 K, übersteigt. Insbesondere kann in diesem Fall die Steuereinrichtung 18 ein Alarmsignal über die Ausgabeeinrichtung 34 ausgeben, um den Benutzer auf eine mögliche Fehlfunktion der Temperaturfühler 14, 16 hinzuweisen.

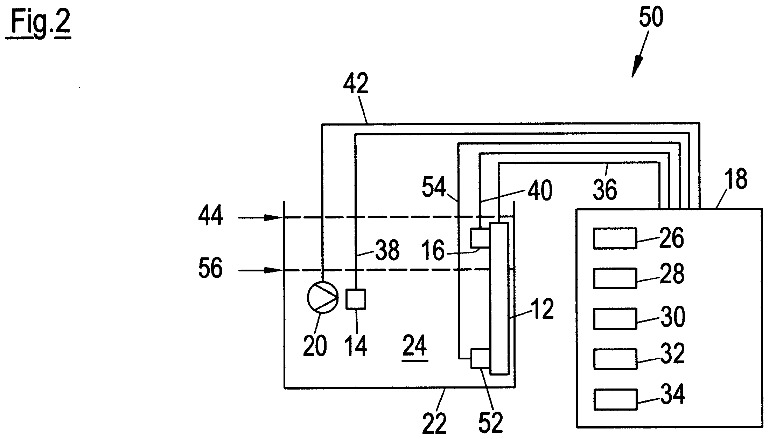

Die in Fig. 2 gezeigte Vorrichtung 50 weist die von der Vorrichtung 10 bekannten Elemente auf, für die in Fig. 2 dieselben Bezugszeichen verwendet werden. Des Weiteren weist die Vorrichtung 50 einen dritten Temperaturfühler 52 auf, der über die elektrischen Leitungen 54 mit der Steuereinrichtung 18 verbunden ist, so dass dieser von der Steuereinrichtung 18 angesteuert und/oder bestromt werden kann. Der dritte Temperaturfühler 52 ist im unteren Bereich unmittelbar an der Heizeinrichtung 12 angeordnet.

Die Vorrichtung 50 führt die weiter oben in Bezug auf die Vorrichtung 10 beschriebenen Maßnahmen aus, um mittels des ersten und zweiten Temperaturfühlers 14, 16 das Flüssigkeitsbad 24 auf Überhitzung zu überwachen. Ferner vergleicht die Regeleinrichtung 26 bei der Vorrichtung 50 die Ist-Temperatur der Heizeinrichtung 12, die mit dem dritten Temperaturfühler 52 gemessen wird, mit der Ist-Temperatur des Flüssigkeitsbades 24, die mit dem zweiten Temperaturfühler 14 gemessen wird, und gibt ein Steuersignal aus, das eine Herabsenkung oder Abschaltung der Heizleistung, die der Heizeinrichtung 12 zugeführt wird, auslöst, wenn die Differenz der gemessenen Ist-Temperaturen einen bestimmten Wert, beispielsweise 15 K, überschreitet. Dadurch kann zusätzlich zur Überwachung der Heizeinrichtung mit dem ersten Temperaturfühler 16 eine Redundanz erreicht werden.

Auch kann die Regeleinrichtung 26 die mittels des ersten Temperaturfühlers 16 und des dritten Temperaturfühlers 52 gemessenen Ist-Temperaturen miteinander vergleichen und in Abhängigkeit der Differenz dieser Ist-Temperaturen ein Steuersignal ausgeben. Hierbei kann insbesondere eine Herabsetzung der der Heizeinrichtung 12 zugeführten Heizleistung bewirkt werden, wenn diese Differenz einen bestimmten Wert, beispielsweise 15 K oder 30 K, übersteigt, um einer Überhitzung im oberen Bereich der Heizeinrichtung 12 entgegenzuwirken.

Die Regeleinrichtung 26 kann dabei insbesondere so ausgelegt sein, dass mit höchster Priorität vermieden wird, dass eine an der Heizeinrichtung 12 mittels des ersten oder dritten Temperaturfühlers 16, 52 gemessene Ist-Temperatur den Brennpunkt der Flüssigkeit erreicht und dass insbesondere ein Alarm- und/oder Steuersignal ausgelöst wird, welches eine Herabsetzung der der Heizeinrichtung 12 zugeführten Heizleistung auslöst, wenn eine an der Heizeinrichtung 12 gemessene Ist-Temperatur die vorgegebene Maximaltemperatur erreicht oder übersteigt.

Mit zweithöchster Priorität kann die Regeleinrichtung 26 ein Alarm- und oder Steuersignal auslösen, welches insbesondere die der Heizeinrichtung 12 zugeführte Heizleistung senkt, wenn die Differenz zwischen der Ist-Temperatur der Heizeinrichtung 12, welche mit dem ersten Temperaturfühler 16 gemessen wird, und der Ist-Temperatur des Flüssigkeitsbades 24, welche mit dem zweiten Temperaturfühler 14 gemessen wird, einen vorgegeben Wert, beispielsweise 15 K, übersteigt. Die zweithöchste Priorität kann dabei auch nur optional von der Regeleinrichtung 26 berücksichtigt werden.

Mit dritthöchster Priorität regelt außerdem die Regeleinrichtung 26 die Heizeinrichtung 12 derart, dass eine Erhitzung des Flüssigkeitsbades 24 auf die vom Benutzer vorgegebene Soll-Temperatur erfolgt.

Das Flüssigkeitsniveau des Flüssigkeitsbades 24 kann von dem vorgesehenen Flüssigkeitsniveau 44 abweichen. Beispielsweise kann das Flüssigkeitsbad ein abgesunkenes Flüssigkeitsniveau 56 aufweisen. Beim abgesunkenen Flüssigkeitsniveau 56 wird der obere Bereich der Heizeinrichtung 12, in dem der erste Temperaturfühler 16 angeordnet ist, nicht mehr von Flüssigkeit umspült. Vielmehr wird dieser Bereich von der Umgebungsluft umgeben. Die von der Heizeinrichtung 12 erzeugte Wärme wird schlechter an die Umgebungsluft als an die Flüssigkeit abgegeben. Dadurch wird sich der obere Bereich der Heizeinrichtung 12 stärker erwärmen als der unter Bereich der Heizeinrichtung 12, welcher von Flüssigkeit umspült ist. Bei abgesunkenem Flüssigkeitsniveau 56 wird daher der erste Temperaturfühler 16 eine höhere Ist-Temperatur anzeigen als der dritte Temperaturfühler 52.

Dies macht sich die Steuereinrichtung 18 zu Nutze, indem diese ein Absinken des Flüssigkeitsniveaus annimmt, wenn mit dem ersten Temperaturfühler 16 eine höhere Ist-Temperatur gemessen wird als mit dem dritten Temperaturfühler 52. Insbesondere löst die Regeleinrichtung 26 eine Absenkung oder Abschaltung der der Heizeinrichtung 12 zugeführten elektrischen Heizleistung aus, wenn die Differenz der vom ersten und dritten Temperaturfühler gemessenen Ist-Temperaturen größer oder gleich einem vorgegebenen Temperaturwert ist, der beispielsweise 15 K oder mehr beträgt. Auch kann die Regeleinrichtung 26 ein Alarmsignal über die Ausgabeeinrichtung 34 ausgeben, um damit dem Benutzer anzuzeigen, dass vermutlich das Flüssigkeitsniveau abgesunken ist.

Des weiteren kann es vorkommen, dass die Vorrichtung 50 bei im Wesentlichen leerem Flüssigkeitsbad 24 betrieben wird. Dann werden alle drei Temperaturfühler 14, 16, 52 von der Umgebungsluft umspült. Bei beheizter Heizeinrichtung 12 werden die mittels des ersten Temperaturfühlers 16 und des dritten Temperaturfühlers 52 gemessenen Ist-Temperaturen daher ansteigen, wohingegen mit dem zweiten Temperaturfühler 14 die im Wesentlichen konstante Temperatur der Umgebungsluft gemessen wird. Diese Kriterien werden von der Regeleinrichtung 26 verwendet, um ein leeres Flüssigkeitsbad zu erkennen. Insbesondere löst die Regeleinrichtung 26 nach Ablauf einer vorgegebenen Zeit nachdem diese ein Trockengehen des Flüssigkeitsbades 24 annimmt, ein Steuersignal aus, um die Heizeinrichtung abzuschalten. Zudem kann die Regeleinrichtung 26 dazu ausgebildet sein, ein Alarmsignal für einen Benutzer auszugeben, um diesem anzuzeigen, dass das Flüssigkeitsbad 24 leer ist, und diesen gegebenenfalls auffordern, Flüssigkeit nachzufüllen.

Die Regeleinrichtung 26 ist bevorzugt dazu ausgebildet, den oben beschriebenen Test auf Trockengehen oder auf Absinken des Flüssigkeitsniveaus vor dem Beginn einer Temperierung der Heizeinrichtung 12 durchzuführen. Dadurch kann ein Benutzer bereits bei Temperierbeginn auf ein abgesunkenes bzw. leeres Flüssigkeitsbad 24 hingewiesen werden.

Ferner kann die Regeleinrichtung 26 so ausgebildet sein, dass vor Inbetriebnahme der Heizeinrichtung 12 getestet wird, ob die Temperaturfühler 14, 16, 52 ordnungsgemäß funktionieren. Dazu wird die Umwälzpumpe 20 eingeschaltet und es werden die Ist-Temperaturen mittels der drei Temperaturfühler 14, 16, 52 nach Ablauf einer vorgegebenen Zeit nach dem Einschalten der Pumpe 20, beispielsweise nach 10 Sekunden, ermittelt. Die drei Temperaturfühler 14, 16, 52 sollten dann im Wesentlichen die gleiche Temperatur und/oder über die vorgegebene Zeit dieselbe Temperaturrampe anzeigen, da das Flüssigkeitsbad 24 von der Umwälzpumpe 20 erwärmt wird. Falls eine Abweichung der von den drei Temperaturfühlern 14, 16, 52 angezeigten Ist-Temperaturen über einen festgelegten Vertrauensbereich, beispielsweise 3 K, hinaus festgestellt wird, kann die Regeleinrichtung 26 so ausgelegt sein, dass diese nach Ablauf einer weiteren Zeitspanne die Ist-Temperaturen oder Rampen mit den drei Temperaturfühlern erneut misst. Falls die drei Ist-Temperaturen oder Rampen dann immer noch nicht übereinstimmen, wird angenommen, dass zumindest einer der Temperaturfühler 14, 16, 52 funktionsuntüchtig ist und die Steuereinrichtung 18 gibt mittels der Ausgabeeinrichtung 34 eine entsprechende Fehlermeldung an den Benutzer aus.

Wie bereits erwähnt, kann der Benutzer einerseits die Soll-Temperatur, auf die das Flüssigkeitsbad 24 erwärmt werden soll, angeben. Andererseits wird der Benutzer von der Steuereinrichtung 18 aufgefordert, den Brennpunkt für die Flüssigkeit im Flüssigkeitsbad 24 einzugeben. Der Benutzer kann ferner von der Steuereinrichtung 18 aufgefordert werden, eine genaue Bezeichnung für die Flüssigkeit, die sich im Flüssigkeitsbad 24 befindet, einzugeben. Auf dem Speicher 30 kann eine Zuordnung zwischen genauen Bezeichnungen einer Vielzahl von Flüssigkeiten und deren Brennpunkten hinterlegt sein. Der Prozessor 28 kann dann mittels der vom Benutzer angegebenen Bezeichnung den hierfür auf dem Speicher 30 gespeicherten Brennpunkt auslesen und diesen mit dem vom Benutzer eingegeben Brennpunkt vergleichen. Hierdurch kann eine Plausibilitätsüberprüfung erfolgen, ob der Benutzer tatsächlich den korrekten Brennpunkt eingegeben hat. Insbesondere kann die Steuereinrichtung 18 mittels der Ausgabeeinrichtung 34 ein Alarmsignal an den Benutzer ausgeben, falls eine Diskrepanz zwischen dem eingegebenen und dem hinterlegten Brennpunkt festgestellt wird.

### Bezugszeichenliste

- 10: Vorrichtung
- 12: Heizeinrichtung
- 14: zweiter Temperaturfühler
- 16: erster Temperaturfühler
- 18: Steuereinrichtung
- 20: Umwälzpumpe
- 22: Behälter
- 24: Flüssigkeitsbad
- 26: Regeleinrichtung
- 28: Mikroprozessor
- 30: Speicher
- 32: Eingabeeinrichtung
- 34: Ausgabeeinrichtung
- 36: elektrische Leitung
- 38: elektrische Leitung
- 40: elektrische Leitung
- 42: elektrische Leitung
- 44: Flüssigkeitsniveau
- 50: Vorrichtung
- 52: dritter Temperaturfühler
- 54: elektrische Leitung
- 56: abgesunkenes Flüssigkeitsniveau

## Patentansprüche

1. Verfahren zum Betreiben eines mit einer Heizeinrichtung (12), insbesondere einer elektrischen Widerstandsheizung, beheizten Flüssigkeitsbades (24), insbesondere zum Überwachen auf Überhitzung und/oder Absinken des Flüssigkeitsniveaus, bei welchem mittels eines Temperaturfühlers (16) eine Ist-Temperatur ermittelt und in Abhängigkeit von der mit dem Temperaturfühler (16) gemessenen Ist-Temperatur ein Alarm- und/oder Steuersignal ausgegeben wird,
**dadurch gekennzeichnet, dass**
mittels des Temperaturfühlers (16) die Ist-Temperatur der Heizeinrichtung (12) oder die Ist-Temperatur der Flüssigkeit an der Heizeinrichtung (12) und mit einem weiteren, zweiten Temperaturfühler (14) die Ist-Temperatur des Flüssigkeitsbades (24) ermittelt wird, und
dass der zweite Temperaturfühler (14) von der Heizeinrichtung (12) räumlich entfernt im unteren Bereich des Flüssigkeitsbades (24) angeordnet ist.

2. Verfahren nach Anspruch 1,
**dadurch gekennzeichnet, dass**
ein Alarm- und/oder Steuersignal ausgegeben wird, wenn die mit dem Temperaturfühler (16) ermittelte Ist-Temperatur der Heizeinrichtung (12) eine vorgegebene Maximaltemperatur, insbesondere eine um einen bestimmten Betrag unterhalb des Brennpunkts des Flüssigkeitsbades liegende Temperatur, übersteigt.

3. Verfahren nach einem der vorhergehenden Ansprüche,
**dadurch gekennzeichnet, dass**
ein Alarm- und/oder Steuersignal ausgegeben wird, wenn die mit dem ersten Temperaturfühler (16) gemessene Ist-Temperatur der Heizeinrichtung (12) die mit dem zweiten Temperaturfühler (14) gemessene Ist-Temperatur des Flüssigkeitsbades (24) um einen vorgegebenen ersten Temperaturwert und/oder einen zweiten Temperaturwert übersteigt und/oder dass ein Alarm- und/oder Steuersignal, insbesondere ein Fehlersignal, ausgegeben wird, wenn die mit dem zweiten Temperaturfühler (14) gemessene Ist-Temperatur des Flüssigkeitsbades (24) die mit dem ersten Temperaturfühler (16) gemessene Ist-Temperatur der Heizeinrichtung (12) um einen vorgegebenen Temperaturwert übersteigt.

4. Verfahren nach einem der vorherigen Ansprüche,
**dadurch gekennzeichnet, dass**
die Ist-Temperatur der Heizeinrichtung mittels des ersten Temperaturfühlers (16) in einem oberen Bereich der Heizeinrichtung (12) und mittels eines dritten Temperaturfühlers (52) zusätzlich die Ist-Temperatur der Heizeinrichtung (12) in einem unteren Bereich der Heizeinrichtung (12) ermittelt wird und dass ein Alarm- und/oder Steuersignal ausgegeben wird in Abhängigkeit der Differenz der vom ersten und dritten Temperaturfühler (16, 52) gemessenen Ist-Temperaturen und/oder dass ein Alarm- und/oder Steuersignal ausgegeben wird in Abhängigkeit der Differenz der vom zweiten und dritten Temperaturfühler (14, 52) gemessenen Ist-Temperaturen, wobei, bevorzugt, ein Absinken des Flüssigkeitsniveaus des Flüssigkeitsbades (24) angenommen wird, wenn mit dem ersten Temperaturfühler (16) eine höhere Ist-Temperatur gemessen wird als mit dem dritten Temperaturfühler (52).

5. Verfahren nach einem der vorherigen Ansprüche,
**dadurch gekennzeichnet, dass**
ein leeres Flüssigkeitsbad (24) angenommen wird, wenn die mit dem ersten und/oder dritten Temperaturfühler (16, 52) gemessenen Ist-Temperaturen die mit dem zweiten Temperaturfühler (14) gemessene Ist-Temperatur um einen vorgegebenen Wert übersteigen.

6. Verfahren nach einem der vorherigen Ansprüche,
**dadurch gekennzeichnet, dass**
eine Funktionsüberprüfung der Heizeinrichtung (12) durchgeführt wird, indem vor dem eigentlichen Einschalten der Heizeinrichtung (12) ein kurzer Stromstoß auf die Heizeinrichtung (12) gegeben wird, wobei angenommen wird, dass die Heizeinrichtung (12) ordnungsgemäß funktioniert, wenn der erste und gegebenenfalls der dritte Temperaturfühler (16, 52) einen Temperaturanstieg zeigen und der zweite Temperaturfühler (14) keinen Temperaturanstieg zeigt.

7. Verfahren nach einem der vorhergehenden Ansprüche,
**dadurch gekennzeichnet, dass**
eine Funktionsüberprüfung durchgeführt wird, indem bei ausgeschalteter Heizeinrichtung (12) die Umwälzpumpe (20) angeschaltet wird und die mit dem ersten Temperaturfühler (14) und/oder dem zweiten Temperaturfühler (16) und/oder dem dritten Temperaturfühler (52) gemessenen Ist-Temperaturen ermittelt werden,
und dass ein Alarm- und/oder Steuersignal erzeugt wird, wenn die mit dem ersten und zweiten Temperaturfühler (14, 16) gemessenen Ist-Temperaturen und gegebenenfalls die mit dem dritten Temperaturfühler (14, 52) gemessene Ist-Temperatur keinen im Wesentlichen übereinstimmenden Anstieg zeigen und/oder wenn nach einer vorgegebenen Zeit zwischen mindestens zwei der Ist-Temperaturen eine Differenz besteht, die einen vorgegebenen Wert übersteigt, wobei, bevorzugt, die Heizeinrichtung (12) nach einer vorgegebenen Zeit eingeschaltet und überprüft wird, ob sich die Temperaturrampen verändern, und dass ein Alarm- und/oder Steuersignal ausgegeben wird, wenn sich keine Änderung einstellt.

8. Verfahren nach zumindest einem der vorhergehenden Ansprüche,
**dadurch gekennzeichnet, dass**
eine Plausibilitätsprüfung erfolgt, indem der Benutzer aufgefordert wird, den Brennpunkt der Flüssigkeit und deren Bezeichnung in eine Steuereinrichtung (18) einzugeben, und der eingegebene Brennpunkt mit dem in der Steuereinrichtung (18) für die Flüssigkeit unter der eingegebenen Bezeichnung hinterlegten Brennpunkt verglichen wird, und dass ein Alarmsignal ausgegeben wird, falls eine Abweichung zwischen dem eingegebenen Brennpunkt und dem hinterlegten Brennpunkt festgestellt wird.

9. Verfahren nach zumindest einem der vorhergehenden Ansprüche,
**dadurch gekennzeichnet, dass**
das Steuersignal, insbesondere nach Ablauf einer vorgegebenen Zeitspanne, eine Absenkung oder Abschaltung der Heizleistung für die Heizeinrichtung (12) auslöst.

10. Vorrichtung (10; 50) zum Betreiben eines mit einer Heizeinrichtung (12), insbesondere einer elektrischen Widerstandsheizung, beheizten Flüssigkeitsbades (24), insbesondere zum Überwachen auf Überhitzung und/oder Absinken des Flüssigkeitsniveaus, mit einem Temperaturfühler (14) zur Ermittlung einer Ist-Temperatur und einer Alarm- und/oder Steuersignaleinheit (18), die dazu ausgebildet ist, in Abhängigkeit von der mit dem Temperaturfühler (16) gemessenen Ist-Temperatur ein Alarm- und/oder Steuersignal auszugeben,
**dadurch gekennzeichnet, dass**
der Temperaturfühler (16) zur Ermittlung der Ist-Temperatur der Heizeinrichtung (12) oder der Ist-Temperatur der Flüssigkeit an der Heizeinrichtung (12) ausgebildet ist,
ein zweiter Temperaturfühler (14) vorgesehen ist, der zur Ermittlung der Ist-Temperatur des Flüssigkeitsbades (24) ausgebildet ist, und
der zweite Temperaturfühler (14) von der Heizeinrichtung (12) räumlich entfernt im unteren Bereich des Flüssigkeitsbades (24) angeordnet ist.

11. Vorrichtung nach Anspruch 10,
**dadurch gekennzeichnet, dass**
der erste Temperaturfühler (16) in einem oberen Bereich der Heizeinrichtung (12) angeordnet ist und dass ein dritter Temperaturfühler (52) vorgesehen ist, der zur Ermittlung der Ist-Temperatur der Heizeinrichtung (12) ausgebildet und in einem unteren Bereich der Heizeinrichtung (12) angeordnet ist.

12. Vorrichtung nach Anspruch 10 oder 11,
**dadurch gekennzeichnet, dass**
der erste Temperaturfühler (16) oberhalb des vorgesehenen Flüssigkeitsniveaus (44) angeordnet ist und/oder dass der erste Temperaturführer (16) und gegebenenfalls der dritte Temperaturfühler (52) unmittelbar an der Heizeinrichtung (12) angeordnet, insbesondere mit dieser thermisch gekoppelt sind, wobei, bevorzugt, der erste und gegebenenfalls der dritte Temperaturfühler (16, 52) zur Messung der Filmtemperatur der Badflüssigkeit an der Oberfläche der Heizeinrichtung (12) ausgebildet sind und/oder dass der erste und der dritte Temperaturfühler (14, 52) an den heißesten Stellen der Heizeinrichtung (12) angeordnet sind.

13. Vorrichtung nach einem der Ansprüche 10 bis 12,
**dadurch gekennzeichnet, dass**
der zweite Temperaturfühler (14) an einer Umwälzpumpe (20) angeordnet ist, und/oder dass die Alarm- und/oder Steuersignaleinheit (18) dazu ausgebildet ist, in Abhängigkeit der Differenz der vom ersten und zweiten Temperaturfühler (14, 16) und/oder ersten und dritten Temperaturfühler (16, 52) gemessenen Ist-Temperaturen ein Alarm- und/oder Steuersignal auszugeben.

## Claims

1. A method for operating a liquid bath (24) heated by a heating device (12), in particular by an electric resistance heater, in particular for monitoring for overheating and/or falling of the liquid level, in which an actual temperature is determined by means of a temperature sensor (16) and an alarm signal and/or a control signal is/are output in dependence on the actual temperature measured by the temperature sensor (16),
**characterized in that**
the actual temperature of the heating device (12) or the actual temperature of the liquid at the heating device (12) is determined by means of the temperature sensor (16) and the actual temperature of the liquid bath (24) is determined by a further second temperature sensor (14); and
**in that** the second temperature sensor (14) is arranged spatially remote from the heating device (12) in the lower region of the liquid bath (24).

2. A method in accordance with claim 1,
**characterized in that**
an alarm signal and/or a control signal is/are output when the actual temperature of the heating device (12) determined by the temperature sensor (16) exceeds a preset maximum temperature, in particular a temperature lying below the combustion point of the liquid bath by a specific amount.

3. A method in accordance with one of the preceding claims,
**characterized in that**
an alarm signal and/or a control signal is/are output when the actual temperature of the heating device (12) measured by the first temperature sensor (16) exceeds the actual temperature of the liquid bath (24) measured by the second temperature sensor (14) by a preset first temperature value and/or by a second temperature value; and/or **in that** an alarm signal and/or a control signal, in particular a fault signal, is output when the actual temperature of the liquid bath (24) measured by the second temperature sensor (14) exceeds the actual temperature of the heating device (12) measured by the first temperature sensor (16) by a preset temperature value.

4. A method in accordance with any one of the preceding claims,
**characterized in that**
the actual temperature of the heating device is determined by means of the first temperature sensor (16) in an upper region of the heating device (12) and additionally the actual temperature of the heating device (12) in a lower region of the heating device (12) by means of a third temperature sensor (52); and **in that** an alarm signal and/or a control signal is/are output in dependence on the difference of the actual temperatures measured by the first and third temperature sensors (16, 52); and/or **in that** an alarm signal and/or a control signal is/are output in dependence on the difference of the actual temperatures measured by the second and third temperature sensors (14, 52), with a falling of the liquid level of the liquid bath (24) preferably being assumed when a higher actual temperature is measured by the first temperature sensor (16) than by the third temperature sensor (52).

5. A method in accordance with any one of the preceding claims,
**characterized in that**
an empty liquid bath (24) is assumed when the actual temperatures measured by the first and/or third temperature sensors (16, 52) exceed the actual temperature measured by the second temperature sensor (14) by a preset value.

6. A method in accordance with any one of the preceding claims,
**characterized in that**
a function test of the heating device (12) is carried out **in that** a brief current pulse is applied to the heating device (12) before the actual switching on of the heating device (12), with it being assumed that the heating device (12) is operating properly when the first and, optionally, the third temperature sensors (16, 52) display a temperature increase and the second temperature sensor (14) does not display any temperature increase.

7. A method in accordance with any one of the preceding claims,
**characterized in that**
a function test is carried out **in that**, with a switched off heating device (12), the circulation pump (20) is switched on and the actual temperatures measured by the first temperature sensor (14) and/or by the second temperature sensor (16) and/or by the third temperature sensor (52) are determined;
and **in that** an alarm signal and/or a control signal is/are generated when the actual temperatures measured by the first and second temperature sensors (14, 16) and, optionally, the actual temperature measured by the third temperature sensor (14, 52) do not display any essentially coinciding increase and/or if there is a difference which exceeds a preset value between at least two of the actual temperatures after a preset time, with the heating device (12) preferably being switched on after a preset time and a check being made whether the temperature ramps change; and **in that** an alarm signal and/or a control signal is/are output when no change is adopted.

8. A method in accordance with at least one of the preceding claims,
**characterized in that**
a plausibility check is made **in that** the user is prompted to input the combustion point of the liquid and its designation into a control device (18) and the input combustion point is compared with the combustion point stored in the control device (18) for the liquid under the input designation; and **in that** an alarm signal is output if a deviation is found between the input combustion point and the stored combustion point.

9. A method in accordance with at least one of the preceding claims,
**characterized in that**
the control signal in particular triggers a lowering or switching off of the heating energy for the heating device (12) after the end of a preset time interval.

10. An apparatus (10; 50) for operating a liquid bath (24) heated by a heating device (12), in particular by an electric resistance heater, in particular for monitoring for overheating and/or falling of the liquid level, having a temperature sensor (14) for determining an actual temperature and an alarm signal unit and/or a control signal unit (18) which is configured to output an alarm signal and/or a control signal in dependence on the actual temperature measured by the temperature sensor (16),
**characterized in that**
the temperature sensor (16) is configured for determining the actual temperature of the heating device (12) or the actual temperature of the liquid at the heating device (12);
**in that** a second temperature sensor (14) is provided which is configured for determining the actual temperature of the liquid bath (24); and
**in that** the second temperature sensor (14) is arranged spatially remote from the heating device (12) in the lower region of the liquid bath (24).

11. An apparatus in accordance with claim 10,
**characterized in that**
the first temperature sensor (16) is arranged in an upper region of the heating device (12); and **in that** a third temperature sensor (52) is provided which is configured for determining the actual temperature of the heating device (12) and is arranged in a lower region of the heating device (12).

12. An apparatus in accordance with claim 10 or claim 11,
**characterized in that**
the first temperature sensor (16) is arranged above the designated liquid level (44); and/or **in that** the first temperature sensor (16) and, optionally, the third temperature sensor (52) are arranged directly at the heating device (12), are in particular thermally coupled thereto, with the first and, optionally, the third temperature sensor (16, 15) preferably being configured for measuring the film temperature of the bath liquid at the surface of the heating device (12); and/or **in that** the first and third temperature sensors (14, 52) are arranged at the hottest points of the heating device (12).

13. An apparatus in accordance with any one of the claims 10 to 12,
**characterized in that**
the second temperature sensor (14) is arranged at a circulation pump (20); and/or **in that** the alarm signal unit and/or the control signal unit (18) is configured to output an alarm signal and/or a control signal in dependence on the difference of the actual temperatures measured by the first and second temperature sensors (14, 16) and/or by the first and third temperature sensors (16, 52).

## Revendications

1. Procédé pour faire fonctionner un bain de liquide (24) chauffé par un moyen de chauffage (12), en particulier par un chauffage électrique à résistance, en particulier pour le surveiller vis-à-vis d'une surchauffe et/ou d'une baisse du niveau de liquide, dans lequel, au moyen d'un capteur de température (16), une température réelle est déterminée et un signal d'alarme et/ou de commande est émis en fonction de la température réelle mesurée par le capteur de température (16),
**caractérisé en ce que**
la température réelle du moyen de chauffage (12) ou la température réelle du liquide au niveau du moyen de chauffage (12) est déterminée au moyen du capteur de température (16), et la température réelle du bain de liquide (24) est déterminée par un autre, second capteur de température (14), et
le second capteur de température (14) est agencé dans la zone inférieure du bain de liquide (24) en étant éloigné dans l'espace du moyen de chauffage (12).

2. Procédé selon la revendication 1,
**caractérisé en ce que**
un signal d'alarme et/ou de commande est émis lorsque la température réelle du moyen de chauffage (12) déterminée par le capteur de température (16) dépasse une température maximale prédéterminée, en particulier une température inférieure d'un montant déterminé à celle du point de brûlage du bain de liquide.

3. Procédé selon l'une des revendications précédentes,
**caractérisé en ce que**
un signal d'alarme et/ou de commande est émis lorsque la température réelle du moyen de chauffage (12) mesurée par le premier capteur de température (16) dépasse la température réelle du bain de liquide (24) mesurée par le second capteur de température (14) d'une première valeur de température prédéterminée et/ou d'une seconde valeur de température,
et/ou **en ce qu'**un signal d'alarme et/ou de commande, en particulier un signal d'erreur, est émis lorsque la température réelle du bain de liquide (24) mesurée par le second capteur de température (14) dépasse d'une valeur de température prédéterminée la température réelle du moyen de chauffage (12) mesurée par le premier capteur de température (16).

4. Procédé selon l'une des revendications précédentes,
**caractérisé en ce que**
la température réelle du moyen de chauffage est déterminée dans une zone supérieure du moyen de chauffage (12) à l'aide du premier capteur de température (16) et en supplément la température réelle du moyen de chauffage (12) est déterminée dans une zone inférieure du moyen de chauffage (12) à l'aide d'un troisième capteur de température (52),
et **en ce qu'**un signal d'alarme et/ou de commande est émis en fonction de la différence des températures réelles mesurées par les premier et troisième capteurs de température (16, 52),
et/ou **en ce qu'**un signal d'alarme et/ou de commande est émis en fonction de la différence des températures réelles mesurées par les second et troisième capteurs de température (14, 52), et de préférence une baisse du niveau de liquide du bain de liquide (24) est supposée lorsqu'une température réelle est mesurée par le premier capteur de température (16), qui est supérieure à celle mesurée par le troisième capteur de température (52).

5. Procédé selon l'une des revendications précédentes,
**caractérisé en ce que**
un bain de liquide vide (24) est supposé lorsque les températures réelles mesurées par le premier et/ou par le troisième capteur de température (16, 52) dépassent d'une valeur prédéterminée la température réelle mesurée par le second capteur de température (14).

6. Procédé selon l'une des revendications précédentes,
**caractérisé en ce que**
un contrôle fonctionnel du moyen de chauffage (12) est mis en oeuvre en appliquant une courte impulsion de courant au moyen de chauffage (12), avant l'allumage proprement dit du moyen de chauffage (12), en supposant que le moyen de chauffage (12) fonctionne correctement lorsque le premier et le cas échéant le troisième capteur de température (16, 52) montrent une augmentation de la température et que le second capteur de température (14) ne montre pas d'augmentation de la température.

7. Procédé selon l'une des revendications précédentes,
**caractérisé en ce que**
un contrôle fonctionnel est mis en oeuvre en allumant la pompe de circulation (20), le moyen de chauffage (12) étant éteint, et en déterminant les températures réelles mesurées par le premier capteur de température (14) et/ou par le second capteur de température (16) et/ou par le troisième capteur de température (52),
et **en ce qu'**un signal d'alarme et/ou de commande est généré lorsque les températures réelles mesurées par les premier et second capteurs de température (14, 16) et le cas échéant la température réelle mesurée par le troisième capteur de température (14, 52) ne montrent pas d'augmentation sensiblement identique et/ou lorsqu'après un temps prédéterminé il existe une différence entre au moins deux des températures réelles, qui dépasse une valeur prédéterminée, et de préférence le moyen de chauffage (12) est allumé après un temps prédéterminé et un contrôle est effectué pour savoir si les rampes de température varient,
et **en ce qu'**un signal d'alarme et/ou de commande est émis lorsqu'aucune variation n'apparaît.

8. Procédé selon l'une au moins des revendications précédentes,
**caractérisé en ce que**
un contrôle de plausibilité est effectué dans lequel l'utilisateur est invité à entrer le point de brûlage du liquide et sa désignation dans un moyen de commande (18), et le point de brûlage entré est comparé avec le point de brûlage stocké dans le moyen de commande (18) pour le liquide sous la désignation entrée, et
**en ce qu'**un signal d'alarme est émis si un écart entre le point de brûlage entré et le point de brûlage stocké est constaté.

9. Procédé selon l'une au moins des revendications précédentes,
**caractérisé en ce que**
le signal de commande, en particulier après écoulement d'une période temporelle prédéterminée, déclenche une baisse ou une extinction de la puissance de chauffage pour le moyen de chauffage (12).

10. Dispositif (10 ; 50) pour faire fonctionner un bain de liquide (24) chauffé par un moyen de chauffage (12), en particulier par un chauffage électrique à résistance, en particulier pour le surveiller vis-à-vis d'une surchauffe et/ou d'une baisse du niveau de liquide, comportant un capteur de température (14) pour déterminer une température réelle et une unité d'émission de signal d'alarme et/ou de commande (18) qui est réalisée pour émettre un signal d'alarme et/ou de commande en fonction de la température réelle mesurée par le capteur de température (16),
**caractérisé en ce que**
le capteur de température (16) est réalisé pour déterminer la température réelle du moyen de chauffage (12) ou la température réelle du liquide au niveau du moyen de chauffage (12),
il est prévu un second capteur de température (14) qui est réalisé pour déterminer la température réelle du bain de liquide (24), et
le second capteur de température (14) est agencé dans la zone inférieure du bain de liquide (24) en étant éloigné dans l'espace du moyen de chauffage (12).

11. Dispositif selon la revendication 10,
**caractérisé en ce que**
le premier capteur de température (16) est agencé dans une zone supérieure du moyen de chauffage (12), et
**en ce qu'**il est prévu un troisième capteur de température (52) qui est réalisé pour déterminer la température réelle du moyen de chauffage (12) et qui est agencé dans une zone inférieure du moyen de chauffage (12).

12. Dispositif selon la revendication 10 ou 11,
**caractérisé en ce que**
le premier capteur de température (16) est agencé au-dessus du niveau de liquide prévu (44), et/ou
**en ce que** le premier capteur de température (16) et le cas échéant le troisième capteur de température (52) sont agencés directement sur le moyen de chauffage (12) et sont en particulier couplés thermiquement à celui-ci, et de préférence le premier et le cas échéant le troisième capteur de température (16, 52) sont réalisés pour mesurer la température du film du liquide du bain à la surface du moyen de chauffage (12), et/ou **en ce que** les premier et troisième capteurs de température (14, 52) sont agencés aux emplacements les plus chauds du moyen de chauffage (12).

13. Dispositif selon l'une des revendications 10 à 12,
**caractérisé en ce que**
le second capteur de température (14) est agencé sur une pompe de circulation (20), et/ou
**en ce que** l'unité d'émission de signal d'alarme et/ou de commande (18) est réalisée pour émettre un signal d'alarme et/ou de commande en fonction de la différence des températures réelles mesurées par les premier et second capteurs de température (14, 16) et/ou par les premier et troisième capteurs de température (16, 52).
